# EUROPEAN PATENT APPLICATION

(11) **EP 4 149 179 A1**
(43) Date of publication of application: **15.03.2023**
(21) Application number: 21821510.1
(22) Date of filing: 03.06.2021
(51) Int. Cl.: H04W 56/00

(54) **TIME SYNCHRONIZATION METHOD, ELECTRONIC DEVICE, SERVER AND STORAGE MEDIUM**

(30) Priority: 12.06.2020 CN 202010536254
(71) Applicant: ZTE Corporation, Shenzhen, Guangdong 518057 (CN)
(72) Inventor: LUO, Li, Shenzhen, Guangdong 518057 (CN); FU, Xiaoming, Shenzhen, Guangdong 518057 (CN)
(74) Representative: Osterhoff, Utz
(86) International application number: PCT/CN2021/098169
(87) International publication number: WO 2021/249283

(57) **Abstract**

Embodiments of the present application relate to the field of communication and disclose a time synchronization method, an electronic device, a server and a storage medium. In the present application, an air interface message transmitted by a base station is received, and parsing out synchronization time information and leap predication information from the air interface message are parsed out; and it performs time synchronization with the base station according to the synchronization time information and the leap predication information.

## Description

### CROSS-REFERENCE TO RELATED APPLICATIONS

The present application claims priority to Chinese patent application No. 202010536254.0, filed on June 12, 2020. The disclosures of the above-mentioned applications are incorporated herein by reference in their entireties.

### TECHNICAL FIELD

The embodiments of the present application relate to the field of communications, and in particular to a time synchronization method, an electronic device, a server, and a storage medium.

### BACKGROUND

The leap refers to adjust coordinated universal time (UTC) to be close to universal time (UT) by the international bureau of weights and measures to increase or decrease UTC by 1s at the end of the year or at the middle of the year or at the quarter of the year. Due to the non-uniformity and the chronicity slowdown of the earth's rotation, when the difference between UT and an international atomic time (IAT) exceeds ±0.9s, UTC will be moved forward by 1s (a negative leap, the last minute is 59s) or 1s back (a positive leap, the last minute is 61s).

At present, when a 5G terminal device is used as a target device to be timed, the time synchronization is achieved through 5G wireless air interface timing, that is, the 5G terminal device receives the message transmitted by the base station and parses out the message to obtain the synchronization time, to realize time synchronization with the base station. In some cases, there are at least the following problems: when time synchronization is performed through 5G wireless air interface timing, the 5G terminal device cannot obtain the leap predication in advance. After the leap occurrence time, the UTC time calculated by the 5G terminal device will be wrong, resulting in that time synchronization cannot be performed accurately.

### SUMMARY

The purpose of the present application is to provide a time synchronization method, an electronic device, a server, and a storage medium. The accuracy of the time synchronization is improved.

In order to solve the above technical problem, the embodiment of the present application provides a time synchronization method, including:
receiving an air interface message transmitted by a base station, and parsing out synchronization time information and leap predication information from the air interface message; and
performing time synchronization with the base station according to the synchronization time information and the leap predication information.

The present application also provides an electronic device, including:
at least one processor; and,
a memory communicated with the at least one processor; wherein,
the memory stores instructions executable by the at least one processor, and the instructions are executed by the at least one processor, the at least one processor executes the time synchronization method as mentioned above.

The present application also provides a server, including:
at least one processor; and,
a memory communicated with the at least one processor; wherein,
the memory stores instructions executable by the at least one processor, and the instructions are executed by the at least one processor, the at least one processor executes the time synchronization method as mentioned above.

The present application also provides a computer-readable storage medium, wherein a computer program is stored on the computer-readable storage medium, the computer program, when executed by a processor, implements the time synchronization method as mentioned above.

### BRIEF DESCRIPTION OF THE DRAWINGS

One or more embodiments are exemplified by the corresponding drawings. These exemplified descriptions do not constitute a limitation on the embodiments. The elements with the same reference numerals in the drawings are denoted as similar elements, unless otherwise stated, the drawings do not constitute a scale limitation.
FIG. 1 is a flowchart of a time synchronization method according to a first embodiment of the present application.
FIG. 2 is a schematic structural diagram of a format of the SIB9 message according to a first embodiment of the present application.
FIG. 3 is a schematic structural diagram of a format of a field in an RRC message for characterizing reference time information according to a first embodiment of the present application.
FIG. 4 is a flowchart of a time synchronization method according to a second embodiment of the present application.
FIG. 5 is a schematic structural diagram of a standard format of an IRIG-B code according to a second embodiment of the present application.
FIG. 6 is a flowchart of a time synchronization method according to a third embodiment of the present application.
FIG. 7 is a schematic structural diagram of an electronic device according to a fourth embodiment or of a server according to a fifth embodiment of the present application.

### DETAILED DESCRIPTION OF THE EMBODIMENTS

In order to make the purposes, technical solutions, and advantages of the embodiments of the present application clearer, the various embodiments of the present application will be described in detail below in conjunction with the drawings. However, those skilled in the art can understand that in each embodiment of the present application, many technical details are proposed for the reader to better understand the present application. However, even without these technical details and various changes and modifications based on the following embodiments, the technical solution of the present application can be realized. The following division of the various embodiments is for convenience of description, and should not constitute any limitation on the specific embodiment of the present application, and the various embodiments may be combined with each other without contradiction.

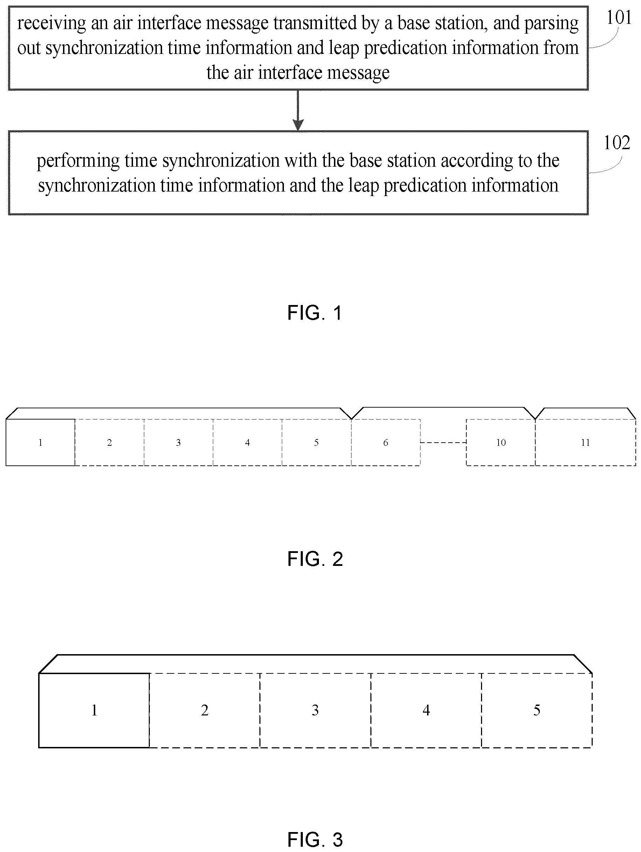

The first embodiment of the present application relates to a time synchronization method, which is applied to an electronic device, such as a 5G terminal. This embodiment and the following embodiments are described with a 5G terminal, but it is not limited thereto. The specific process is shown in FIG. 1, including: Step 101: receiving an air interface message transmitted by a base station, and parsing out synchronization time information and leap predication information from the air interface message.

Specifically, the 5G terminal receives the air interface message that includes the synchronization time information and the leap predication information transmitted by the base station, and parses out the air interface message to obtain the synchronization time information and the leap predication information. The air interface message can exist in the form of cells, protocol messages, etc. The synchronization time information is the current UTC time, and the 5G terminal sets the current UTC time as the local time. The leap predication information includes the leap occurrence time and types of leap, and the leap occurrence time is generally the last minute of a certain day, the type of leap is positive leap, that is, the last minute is 61s, or the type of leap is negative leap, that is, the last minute is 59s, or the type of leap is no leap, that is, the last minute is 60s. In an example, the leap predication information is alarm information, which indicates that the local clock has never been synchronized. In an example, the air interface message may also include one or any combination of the following information: daylight saving time information, time zone offset information, leap, etc., where leap refers to the difference between atomic time GPS time and UTC time value. In an example, the air interface message may also include one or any combination of the following information: time message type, time reference SFN, uncertainty value, and so on.

In an example, the air interface message exists in a form of a protocol message; parsing out the synchronization time information and the leap predication information from the air interface message includes: parsing out a first field and a second field from the protocol message, and the first field carries the synchronization time information, and the second field carries the leap predication information.

Specifically, the protocol jointly followed by the 5G terminal and the base station determines a format of the protocol message. The 5G terminal parses out the first field and the second field from the protocol message, and can know the synchronization time information according to the first field, and can know the leap occurrence time and the type of leap according to the second field. The type of leap can be determined by the value of the leapindicator in the second field. Different values represent different types of leaps, for example, when the value of leapindicator is 0, it indicates that the type of leap is no leap, when the value of leapindicator is 1, it indicates that the type of leap is positive leap, and when the value of leapindicator is 2, it indicates that the type of leap is a negative leap. In an example, the leap predication information is alarm information, and the alarm information can be determined by the value of leapindicator in the second field. For example, when the value of leapindicator is 3, it indicates that it is alarm information at this time. In an example, the protocol message may also include one or any combination of the following information: daylight saving time information, time zone offset information, leaps, etc., each type of information occupies different fields of the protocol message. In an example, the protocol message may also include one or any combination of the following information: time message type, time reference SFN, uncertainty value, etc., each type of information occupies different fields of the protocol message.

In an example, the protocol jointly followed by the 5G terminal and the base station is a new protocol, the protocol message is constructed based on the new protocol, and the first field and the second field are both constructed based on the new protocol. The first field and the second field can be included in the same protocol message or in different protocol messages, the new protocol can be constructed by the developer according to the actual situation.

In an example, the protocol message is based on the 38.331 protocol, the first field is an original field in the protocol message, and the second field is a new field added in the protocol message. Specifically, the 5G terminal and the base station jointly follow the 38.331 protocol, which is one of the 38 series in the third generation partnership project (3GPP) version, and the 38.331 protocol supports multicast messages and unicast messages. The original field of the protocol message based on the 38.331 protocol includes the first field carrying synchronization time information, and the newly added second field carries the leap predication information. The bytes occupied by the second field are set according to actual needs, for example, 2 bytes are occupied by the second field. The first field and the second field may be included in the same protocol message or in different protocol messages. In an example, the protocol message is a system information message SIB9 (system information block 9), and the first field and the second field are in the field of the SIB9 message for characterizing time information. Specifically, the structure diagram of a format of the SIB9 message is shown in FIG. 2. The numbers 1-11 indicate the fields in the SIB9 message, the numbers 1-5 indicate the field domains characterizing time information, and the numbers 6-10 indicate the reserved extended field domains. The number 11 indicates the field domain characterizing the reference time information, where the number 1 indicates the first field and is the original field, the number 2 indicates the second field and is a newly added field, the first field and the second field are both in the field domain characterizing time information. In an example, as shown in FIG. 2, the number 3 indicates the third field and is the original field, and carries daylight saving time information, and the number 4 indicates the fourth field and is the original field, and carries time zone offset information, the number 3 indicates the fifth field and is the original field, and carries leap information.

In an example, the protocol message is a radio resource control (RRC) message, and the first field and the second field are in a field of the RRC message for characterizing reference time information. Specifically, the structural diagram of a format of the field domain in the RRC message for characterizing the reference time information is shown in FIG. 3. The numbers 1-5 indicate the field domain in the RRC message for characterizing the reference time information. The number 1 indicates the first field and is an original field. The number 2 indicates the second field and is a newly added field. Both the first field and the second field are in the field domain for characterizing the reference time information. In an example, as shown in FIG. 3, the number 3 indicates the third field and is the original field, and carries the time message type, the number 4 indicates the fourth field and is the original field, and carries the time reference SFN, and the number 5 indicates the fifth field is an original field and carries an uncertainty value.

Step 102: performing time synchronization with the base station according to the synchronization time information and the leap predication information.

Specifically, when the 5G terminal receives the air interface message that includes the synchronization time information and the leap predication information, the leap occurrence time has not yet arrived. At this time, the 5G terminal sets the current UTC time as the local time and changes the local time according to the normal status to achieve time synchronization with the base station, and calculates the correct UTC time according to the type of leap at the leap occurrence time, and can maintain the time synchronization with the base station at leap occurrence time, to improve the accuracy of the time synchronization accuracy. For example: the leap occurrence time is the last minute of June 30, if it is no leap, the 5G terminal will make UTC time in the last minute of June 30 according to "..., 23:59:59, 00:00:00, 00:00:01, ..." to change, that is, at 23:59:59 on June 30, it will jump to 00:00:00 on July 01; if it is positive leap, and the 5G terminal sets the UTC time in the last minute of June 30 according to "..., 23:59:59, 23:59:60, 00:00:00, 00:00: 01,..." to change, that is, at 23:59:59 on June 30, it will first jump to 23:59:60 on June 30, and then jump to 00:00:00 on July 01; if it is negative leap, the 5G terminal will make UTC time in the last minute of June 30 according to "..., 23:59:58, 00:00:00, 00:00:01, ..." to change, that is, at 23:59:58 on June 30, it will directly jump to 00:00:00 on July 01.

In the embodiment, the air interface message transmitted by the base station is received, and the synchronization time information and the leap predication information are parsed out from the air interface message, so that the leap predication can be obtained in advance, and the leap predication can be obtained according to the synchronization time information and the leap predication information. It can also be time synchronization with the base station at the leap occurrence time, to perform time synchronization accurately.

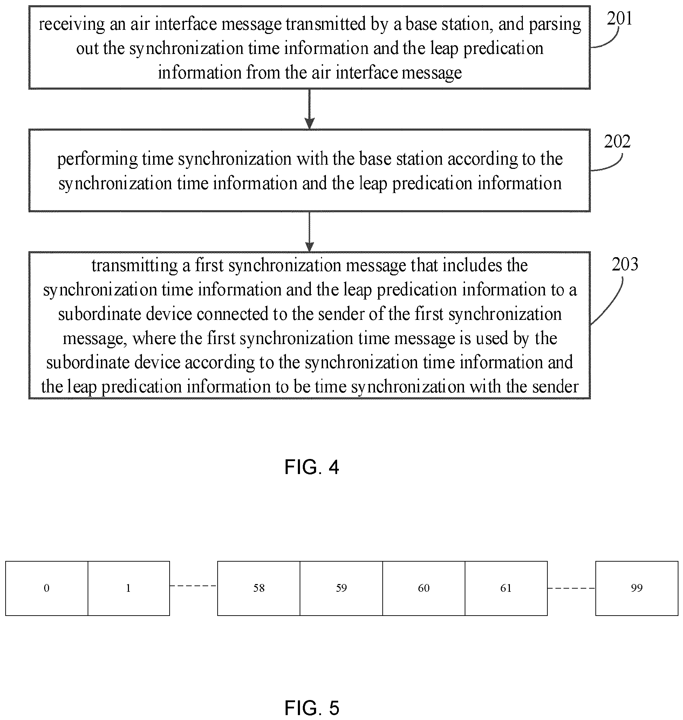

The second embodiment of the present application relates to a time synchronization method. The second embodiment is roughly the same as the first embodiment. The main difference is that the first synchronization message containing synchronization time information and the leap predication information is also transmitted to a subordinate device connected to the sender of the first synchronization message. The specific process is shown in FIG. 4, including:
Step 201: receiving an air interface message transmitted by a base station, and parsing out the synchronization time information and the leap predication information from the air interface message.
Step 202: performing time synchronization with the base station according to the synchronization time information and the leap predication information.
Steps 201-202 are similar to steps 101-102 and will not be repeated here.
Step 203: transmitting a first synchronization message that includes the synchronization time information and the leap predication information to a subordinate device connected to the sender of the first synchronization message, where the first synchronization time message is used by the subordinate device according to the synchronization time information and the leap predication information to be time synchronization with the sender.

Specifically, the sender of the first synchronization message is a 5G terminal, the format of the first synchronization message is a pre-appointed format between the 5G terminal and the subordinate device connected to the 5G terminal, and the first synchronization message can exist in the form of a message or a serial time code and other forms, and the 5G terminal constructs the first synchronization message that contains the synchronization time information and the leap predication information according to the pre-appointed format, and transmits it to the subordinate device. The subordinate device can be connected to the 5G terminal in the application fields of a smart grid, a smart factory, an industrial internet, for example, in the power application field, the subordinate device can be the data transfer unit (DTU) and/or the phasor measurement unit (PMU).

After receiving the first synchronization message transmitted by the 5G terminal, the subordinate device parses out the first synchronization message to obtain synchronization time information and the leap predication information. The synchronization time information is the current UTC time, and the leap predication information includes the leap occurrence time and the type of leap. The subordinate device sets the current UTC time as the local time, and changes the local time according to the normal state to achieve time synchronization with the 5G terminal, and calculates the correct UTC time according to the type of leap at the leap occurrence time, and can also be time synchronization with the 5G terminal at the leap occurrence time, to perform time synchronization accurately.

In an example, the first synchronization message exists in the form of a serial time code; the preset first symbol in the serial time code carries synchronization time information, and the preset second symbol in the serial time code carries leaps predication information. Specifically, the preset first symbol and second symbol are reserved in the serial time code to carry the synchronization time information and the leap predication information, respectively, and the 5G terminal writes the synchronization time information into the first symbol and writes the leap predication information into the second symbol. In an example, the serial time code is IRIG-B code. Regarding the standard format of the IRIG-B code, the structural diagram of the standard format of the IRIG-B code is shown in FIG. 5. The numbers 0-99 indicate symbols, and the first symbol includes symbols with numbers 1-59, carrying synchronization time information; the second symbol includes symbols with numbers 60 and 61, and the symbol with number 60 is a leap predication (LSP) sign, indicating the leap occurrence time, and it is set to 1 59s before the leap comes, and it is set to 0 at 00s after the leap comes, if there is no leap, the symbol with the number 60 is always set to 0. The symbol with the number 61 is a leap (LS) sign, indicating the type of leap, "0" indicates a positive leap, and "1" indicates a negative leap.

In the embodiment, the first synchronization message containing the synchronization time information and the leap predication information is transmitted to the subordinate device connected to the sender of the first synchronization message, the subordinate device can also obtain the leap predication in advance. The subordinate device can keep the time synchronization with the sender at the leap occurrence time, to improve the accuracy of time synchronization.

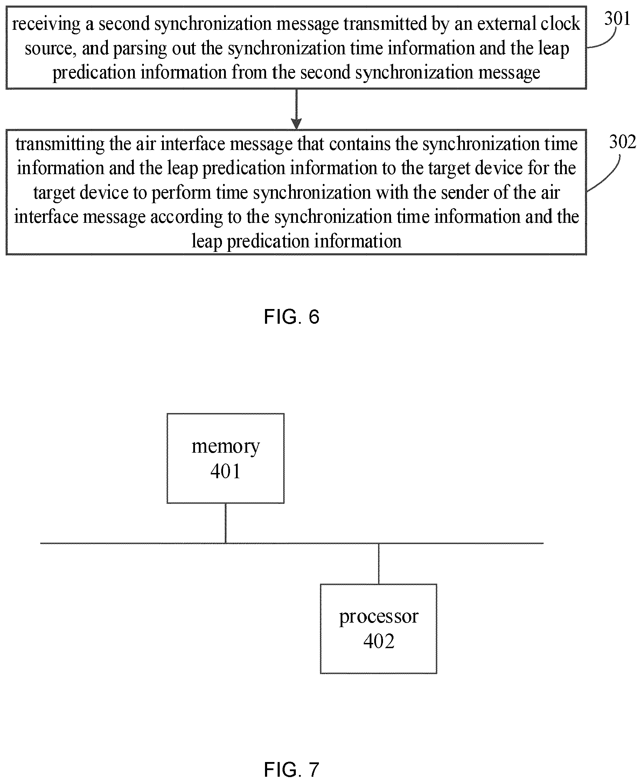

The third embodiment of the present application relates to a time synchronization method, which is applied to a base station. The specific process is shown in FIG. 6, including:
Step 301: receiving a second synchronization message transmitted by an external clock source, and parsing out the synchronization time information and the leap predication information from the second synchronization message.

In an example, the external clock source is a satellite clock source. The satellite clock source refers to using a global navigation satellite system (GNSS) for timing, including a global positioning system (GPS), a beidou satellite navigation and a positioning system, etc. The satellite receiver in the system parses out the satellite message to obtain the synchronization time information and the leap predication information, and sends a second synchronization message containing the synchronization time information and the leap predication information to the base station, and the base station parses out the second synchronization message to obtain the synchronization time information and the leap predication information.

In an example, the external clock source is a network clock source. A network clock source refers to a clock source connected via a wire, such as a 1588 clock source. The protocol jointly followed by the network clock source and the base station may be the precision time protocol (PTP) or the network time protocol (NTP), and the second synchronization message exists in the form of a protocol message.

Step 302: transmitting the air interface message that contains the synchronization time information and the leap predication information to the target device for the target device to perform time synchronization with the sender of the air interface message according to the synchronization time information and the leap predication information.

Specifically, after the base station receives the second synchronization message, it sends an air interface message that contains the synchronization time information and the leap prediction information to the target device at the agreed cycle, that is, the sender of the air interface message is the base station, and the air interface message can exist in the form of a message, or in the form of a letter element. In an example, the air interface message exists in the form of a protocol message; the transmitting an air interface message that contains the synchronization time information and the leap advance information to the target device includes: writing the synchronization time information into the first field in the protocol message, writing the leap predication information into the second field in the protocol message, and transmitting the protocol message to the target device. In an example, the protocol message is defined based on a new protocol, and the first field and the second field are both newly added fields in the protocol message. In an example, the protocol message is based on the 38.331 protocol, the first field is an original field in the protocol message, and the second field is a newly added field in the protocol message.

In the embodiment, the base station receives the second synchronization message transmitted by the external clock source, can accurately obtain the current synchronization time information and the leap predication information, and transmit the air interface message that contains the synchronization time information and the leap predication information to the target device, so that the target device can obtain the leap predication in advance, and can also maintain the time synchronization with the base station at the leap occurrence time according to the synchronization time information and the leap predication information, so that the target device and the base station perform accurate time synchronization.

The division of the steps of the various methods above is only for clarity of description. When implemented, it can be combined into one step or some steps can be split into multiple steps, as long as they include the same logical relationship, they are all within the scope of the present application. Adding insignificant modifications to the algorithm or process or introducing insignificant design, but not changing the core design of the algorithm and process are within the scope of the present application.

The fourth embodiment of the present application relates to an electronic device. As shown in FIG. 7, the electronic device includes at least one processor 402, and a memory 401 communicated with the at least one processor. An instruction executed by one processor 402 is executed by at least one processor 402, so that the at least one processor 402 can execute the time synchronization method in the first embodiment or the second embodiment.

The fifth embodiment of the present application relates to a server. The server refers to a server inside a base station. As shown in FIG. 7, the server includes at least one processor 402, and a memory 401 communicated with the at least one processor. The memory 401 stores instructions executable by at least one processor 402, and the instructions are executed by the at least one processor 402, so that the at least one processor 402 can execute the time synchronization method of the third embodiment.

The memory 401 and the processor 402 are connected in a bus manner, and the bus may include any number of interconnected buses and bridges, and the bus connects one or more various circuits of the processor 402 and the memory 401 together. The bus can also connect various other circuits such as peripheral devices, voltage regulators, power management circuits, etc., which are all known in the art, and therefore, will not be further described herein. The bus interface provides an interface between the bus and the transceiver. The transceiver may be one element or multiple elements, such as multiple receivers and transmitters, providing a unit for communicating with various other devices on the transmission medium. The data processed by the processor 402 is transmitted on the wireless medium through an antenna. In this embodiment, the antenna also receives the data and transmits the data to the processor 402.

The processor 402 is responsible for managing the bus and general processing, and can also provide various functions, including timing, peripheral interfaces, voltage regulation, power management, and other control functions. The memory 401 may be used to store data used by the processor 402 when performing operations.

The sixth embodiment of the present application relates to a computer-readable storage medium, which stores a computer program. When the computer program is executed by the processor, the above method embodiment is realized. The computer-readable storage medium includes transient or non-transitory, removable or non-removable media.

That is, those skilled in the art can understand that all or part of the steps in the method of the foregoing embodiments can be implemented by instructing relevant hardware through a program. The program is stored in a storage medium and includes several instructions to enable a device (it may be a single-chip microcomputer, a chip, etc.) or a processor that executes all or part of the steps of the methods described in the embodiments of the present application. The aforementioned storage media includes: a U disk, a mobile hard disk, a read-only memory (ROM), a random access memory (RAM), magnetic disks or optical disks and other media that can store program codes.

Those skilled in the art can understand that the above-mentioned embodiments are specific embodiments for realizing the present application, and in actual applications, various changes can be made in form and details without departing from the spirit and scope of the present application.

## Claims

1. A time synchronization method, **characterized by** comprising:
receiving an air interface message transmitted by a base station, and parsing out synchronization time information and leap predication information from the air interface message; and
performing time synchronization with the base station according to the synchronization time information and the leap predication information.

2. The time synchronization method according to claim 1, wherein the air interface message exists in a form of a protocol message, the parsing out the synchronization time information and the leap predication information from the air interface message comprises:
parsing out a first field and a second field from the protocol message, wherein the first field carries the synchronization time information, and the second field carries the leap predication information.

3. The time synchronization method according to claim 2, wherein the protocol message is based on a 38.331 protocol, the first field is an original field in the protocol message, and the second field is a new field added in the protocol message.

4. The time synchronization method according to claim 3, wherein the protocol message is a system information message SIB9, and the first field and the second field are in a field domain of the SIB9 message for characterizing time information; or
the protocol message is a radio resource control message RRC, and the first field and the second field are in a field domain of the RRC message for characterizing reference time information.

5. The time synchronization method according to claim 1, wherein after parsing out the synchronization time information and the leap predication information from the air interface message, the time synchronization method further comprises:
transmitting first synchronization message that comprises the synchronization time information and the leap predication information to a subordinate device connected to a sender of the first synchronization message, wherein the first synchronization time message is used for the subordinate device to perform time synchronization with the sender according to the synchronization time information and the leap predication information.

6. The time synchronization method according to claim 5, wherein the first synchronization message exists in a form of a serial time code, a preset first symbol in the serial time code carries the synchronization time information, and a preset second symbol in the serial time code carries the leap predication information.

7. The time synchronization method according to claim 6, wherein the serial time code is an IRIG-B code.

8. A time synchronization method, **characterized by** comprising:
receiving a second synchronization message transmitted by an external clock source, and parsing out synchronization time information and leap predication information from the second synchronization message; and
transmitting an air interface message that comprises the synchronization time information and the leap predication information to a target device, for the target device performing synchronization time with a sender of the air interface message according to the synchronization time information and the leap predication information.

9. The time synchronization method according to claim 8, wherein the air interface message exists in a form of a protocol message, the transmitting an air interface message that comprises the synchronization time information and the leap predication information to the target device comprises:
writing the synchronization time information into a first field in the protocol message, writing the leap predication information into a second field in the protocol message, and transmitting the protocol message to the target device.

10. The time synchronization method according to claim 8, wherein the external clock source is a satellite clock source or a network clock source.

11. An electronic device, **characterized by** comprising:
at least one processor; and
a memory communicated with the at least one processor; wherein,
the memory stores instructions executable by the at least one processor, and the instructions are executed by the at least one processor, the at least one processor executes the time synchronization method according to any one of claims 1 to 7.

12. A server, **characterized by** comprising:
at least one processor; and
a memory communicated with the at least one processor; wherein,
the memory stores instructions executable by the at least one processor, and the instructions are executed by the at least one processor, the at least one processor executes the time synchronization method according to any one of claims 8 to 10.

13. A computer-readable storage medium, **characterized in that**, a computer program is stored on the computer-readable storage medium, the computer program, when executed by a processor, implements the time synchronization method according to any one of claims 1 to 7 or implements the time synchronization method according to any one of claims 8 to 10.
